(19) Europäisches Patentamt / European Patent Office / Office européen des brevets

(11) **EP 3 693 629 A1**

(12) **DEMANDE DE BREVET EUROPEEN**

(43) Date de publication:
**12.08.2020 Bulletin 2020/33**

(51) Int Cl.:
*F16F 7/10* (2006.01)  *F16F 7/116* (2006.01)
*B63H 21/30* (2006.01)

(21) Numéro de dépôt: **20155886.3**

(22) Date de dépôt: **06.02.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **08.02.2019 FR 1901288**

(71) Demandeur: **HUTCHINSON**
**75008 Paris (FR)**

(72) Inventeur: **NOE, Mathieu**
**91610 BALLANCOURT (FR)**

(74) Mandataire: **Gevers & Orès**
**Immeuble le Palatin 2**
**3 Cours du Triangle**
**CS 80165**
**92939 Paris La Défense Cedex (FR)**

(54) **DISPOSITIF D'AMORTISSEMENT DE VIBRATIONS POUR NAVIRE**

(57) L'invention propose un dispositif (100) d'amortissement de vibrations, en particulier destiné à amortir les vibrations générées par un propulseur d'étrave d'un navire, le dispositif comprenant :
- une embase (101) destinée à être fixée à une structure pour laquelle on cherche à amortir les vibrations ;
- un actionneur (102) avec une direction d'actionnement;
- un ensemble masse-ressort comprenant une masse mobile (103) montée sur l'actionneur et une partie ressort ($104_1$, $102_2$, $104_3$, $104_4$) montée entre la masse mobile et l'embase,
caractérisé en ce que la partie ressort comprend deux ressorts à lame plate ($104_1$, $104_2$) agencés parallèlement selon une direction d'extension principale (DEP) sensiblement perpendiculaire à la direction d'actionnement et situés entre l'embase et la masse mobile en référence à la direction d'actionnement.
L'invention concerne également un navire muni d'un tel dispositif et un procédé associé.

EP 3 693 629 A1

## Description

## Domaine technique de l'invention

L'invention concerne un dispositif d'amortissement de vibrations, en particulier destiné à amortir les vibrations générées par un propulseur d'étrave d'un navire.

L'invention concerne également un navire muni d'un propulseur d'étrave, du dispositif en question, d'un capteur de vibrations et d'un contrôleur.

L'invention concerne encore un procédé d'amortissement des vibrations générées par un propulseur d'étrave de navire.

## Arrière-plan technique

On rencontre des problèmes de vibrations sur les navires, notamment du fait de la présence d'un propulseur d'étrave.

Un propulseur d'étrave est un propulseur transversal par rapport à la direction définie par la longueur du navire. Il permet de faciliter les manœuvres, par exemple dans un port ou selon un autre exemple pour maintenir la position du navire en pleine mer lorsque ce navire dérive du fait des courants marins.

Celui-ci est placé aux extrémités du navire, le plus souvent au niveau de la proue et ce, afin d'assurer une efficacité maximale. En fonction du navire considéré, le propulseur d'étrave peut être intégré à la coque du navire et sorti hors de la coque sous la ligne de flottaison quand il doit servir ou, le plus souvent, intégré à la coque avec, dans ce dernier cas, une sortie apparente des hélices sous la ligne de flottaison.

Le propulseur d'étrave génère des vibrations basses fréquences (typiquement entre 10 et 20 Hz, fréquence de passage des pales). Ces vibrations se propagent dans la coque du navire avec des conséquences potentiellement néfastes pour les structures ainsi que pour le confort des personnes à bord.

Il est donc important de pouvoir traiter, d'une manière ou d'une autre, les vibrations générées par un tel propulseur d'étrave et ce d'autant plus que le navire est grand (ex. : paquebot), du fait de la puissance du propulseur et donc de l'amplitude des vibrations ainsi générées.

Le document JPH10138988 (D1) s'intéresse au traitement des vibrations générées par un tel propulseur d'étrave au sein d'un navire.

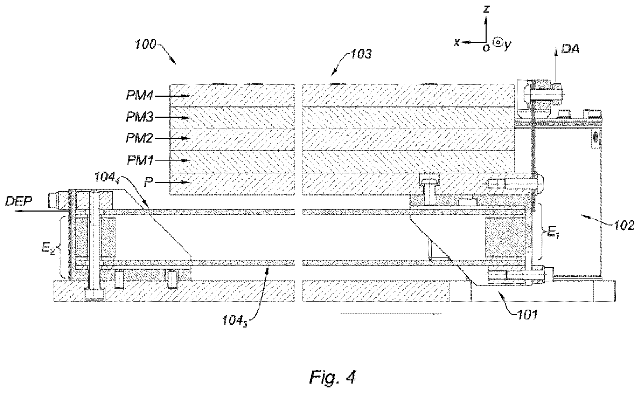

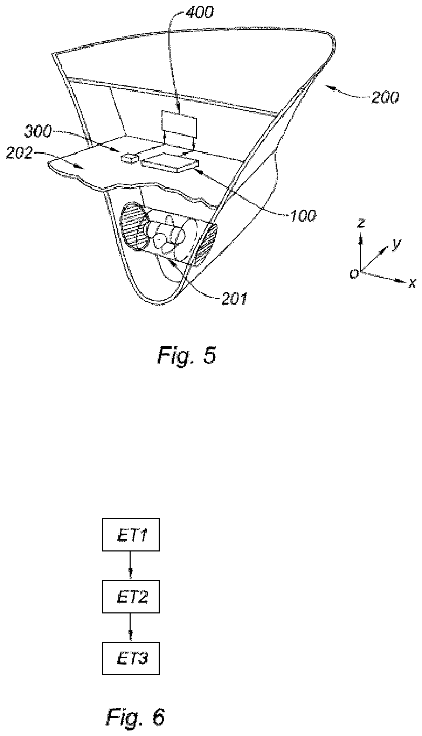

Dans ce document, le dispositif amortisseur de vibrations peut mettre en œuvre un principe de type masse-ressort (fig. 4) ou un principe de masses tournantes (fig. 5).

Peu de détails sont fournis sur la conception exacte du dispositif amortisseur de vibrations. En tout état de cause, il apparaît que la réalisation basée sur le principe de type masse-ressort, met en œuvre une masse mobile suspendue entre deux ressorts de type hélicoïdaux. La masse mobile et les ressorts hélicoïdaux sont insérés dans un portique qui permet le montage des ressorts hélicoïdaux.

Cette conception implique plusieurs limitations.

En effet, la masse mobile est suspendue entre les deux ressorts hélicoïdaux.

De plus, il convient de rappeler que la force générée par l'ensemble masse-ressort est proportionnelle au produit de la masse mobile par le déplacement des ressorts sous sollicitation, force (amplitude) qui doit contrer l'amplitude des vibrations générées par le propulseur d'étrave. Or, pour limiter la fatigue des ressorts, on fait généralement en sorte que le déplacement de ceux-ci soit limité, ce qui implique d'augmenter la masse mobile pour pouvoir fournir la force (amplitude) nécessaire à contrer la vibration.

Les ressorts hélicoïdaux sont donc sollicités dans une direction, ici verticale (Z), qui ne correspond pas à la direction de sollicitation principale des ressorts hélicoïdaux, en l'occurrence horizontale (X), sous l'effet d'un actionneur.

Ceci est d'autant plus sensible que les ressorts hélicoïdaux présentent une rigidité faible, au regard de la rigidité du ressort selon sa direction longitudinale (X), dans des directions (X, Z) perpendiculaires à cette direction longitudinale.

Aussi, pour assurer un guidage linéaire correct de la masse mobile, suspendue entre les deux ressorts hélicoïdaux, on peut penser que ce document mette en œuvre des structures additionnelles aptes à guider correctement les ressorts hélicoïdaux selon leur direction d'actionnement, en l'occurrence la direction horizontale (X).

Ceci complique le dispositif d'amortissement de vibrations.

Un objectif de l'invention est donc de proposer un dispositif d'amortissement de vibrations, en particulier adapté au traitement de vibrations générées par un propulseur d'étrave d'un navire, qui présente une conception plus simple.

Par ailleurs, la conception proposée dans ce document D1 ne permet pas une grande adaptabilité.

En effet, il apparaît que la masse mobile présente une valeur donnée, qui ne peut a priori pas être ajustée en fonction de l'application envisagée. Dès lors, la conception du dispositif proposée dans ce document est adaptée à un propulseur d'étrave particulier, sans qu'elle puisse visiblement évoluer pour s'adapter à d'autres types de propulseurs.

Un autre objectif est donc de proposer un dispositif d'amortissement de vibrations, en particulier adapté au traitement de vibrations générées par un propulseur d'étrave d'un navire, qui présente une conception mieux adaptée à différents propulseurs d'étrave.

En outre, il convient de noter que le dispositif d'amortissement de vibrations proposé dans le document D1 est destiné à être installé au niveau de la source de vibrations. Il cherche donc à limiter la transmission de vibrations depuis la chambre de propulsion (comportant le moteur, la boîte de vitesses et donc, le dispositif d'amortissement de vibrations en question) qui est située juste au-dessus du propulseur lui-même.

Ceci explique le fait que le dispositif d'amortissement de vibrations proposé dans ce document agisse dans un plan horizontal, la source de vibrations (propulseur) générant, en utilisation, une force horizontale (cf. fig. 2 du document D1).

Cela explique également que le système global de traitement prévoit deux dispositifs du même type, l'un sur le sol et l'autre au plafond de la chambre de propulsion, avec deux capteurs de vibrations détectant chacun une vibration horizontale. On peut ainsi, par mesure différentielle sur les capteurs de vibrations, remonter à un moment autour de l'axe horizontal (X), afin de contrer l'effet du moment généré par le propulseur autour de son axe de rotation (X).

On comprend donc que la conception du dispositif d'amortissement de vibrations proposée dans D1 est liée à son lieu d'installation sur le navire. En effet, il est conçu pour être installé au niveau de la source de vibrations, où la direction de celle-ci est connue, tout comme finalement la force à générer pour un propulseur donné.

L'inconvénient de cette approche est que si des vibrations ne sont pas amorties au niveau de la chambre de propulsion, celles-ci se propagent dans la coque et les ponts du navire où des personnes (passagers, équipage) sont susceptibles de se trouver.

D'ailleurs, dans ce document D1, on comprend que le système de base proposé dans ce document (fig. 2) n'est pas parfait dans la mesure où il est proposé une amélioration (fig. 2 de ce document D1) mettant en œuvre un moyen complémentaire, passif cette fois, basé sur l'emploi de corps élastiques pour limiter la propagation de fréquences plus importantes que celles qui sont traitées par le dispositif d'amortissement proprement dit.

Aussi, un autre but de l'invention est de proposer un navire dans lequel le traitement des vibrations s'effectue de manière plus efficace.

Résumé de l'invention

Afin de résoudre l'un au moins des objectifs mentionnés précédemment, l'invention propose un dispositif d'amortissement de vibrations, en particulier destiné à amortir les vibrations générées par un propulseur d'étrave d'un navire, le dispositif comprenant :

- une embase destinée à être fixée à une structure pour laquelle on cherche à amortir les vibrations ;
- au moins un actionneur;
- un ensemble masse-ressort comprenant une masse mobile montée sur l'actionneur de sorte que ladite masse mobile puisse être déplacée par l'actionneur selon une direction dite d'actionnement et une partie ressort dont une première extrémité est montée sur la masse mobile et dont une deuxième extrémité est montée sur l'embase,

caractérisé en ce que la partie ressort comprend au moins un premier jeu d'au moins deux ressorts à lame plate, lesdits ressorts à lame plate étant d'une part agencés parallèlement selon une direction d'extension principale sensiblement perpendiculaire à la direction d'actionnement et étant d'autre part situés entre l'embase et la masse mobile en référence à la direction d'actionnement.

Le dispositif selon l'invention pourra comprendre l'une au moins des caractéristiques suivantes, prises seules ou en combinaison :

- ledit au moins un actionneur est agencé du côté de la première extrémité, laquelle est montée sur la masse mobile, de la partie ressort ;
- la masse mobile comporte un plateau supportant au moins une plaque de masse déterminée ;
- le plateau supporte au moins deux plaques présentant chacune une masse déterminée, lesdites plaques étant superposées selon la direction d'actionnement ;
- la partie ressort comprend au moins un deuxième jeu d'au moins deux ressorts à lame plate qui sont d'une part situés entre l'embase et la masse mobile en référence à la direction d'actionnement et d'autre part agencés parallèlement selon une direction d'extension principale identique à celles des ressorts à lame plate du premier jeu de ressorts à lame plate, définissant ainsi une direction d'extension principale commune, le deuxième jeu de ressorts à lame plate étant par ailleurs décalé par rapport au premier jeu de ressorts à lame plate selon une direction à la fois perpendiculaire à la direction d'actionnement et à la direction d'extension principale commune ;
- le dispositif comprend un actionneur unique agencé entre le premier jeu de ressorts à lame plate et le deuxième jeu de ressorts à lame plate, en référence à la direction à la fois perpendiculaire à la direction d'actionnement et à la direction d'extension principale commune ;
- deux ressorts à lame plate d'un même jeu de ressorts à lame plate sont maintenus parallèlement par l'intermédiaire de deux blocs situés entre les extrémités respectives des ressorts à lame plate, lesdits blocs étant plus rigides que lesdits ressorts ;
- la masse mobile comprend, au niveau d'une première extrémité d'un ressort plat, un premier moyen de rigidification et dans lequel l'embase comprend, au niveau d'une deuxième extrémité d'un ressort plat, un deuxième moyen de rigidification.

L'invention propose également un navire muni d'au moins un propulseur d'étrave, caractérisé en ce qu'il comprend :

- au moins un dispositif d'amortissement de vibrations selon l'invention, ledit dispositif étant monté sur un pont du navire de sorte que la direction d'actionnement de l'actionneur soit perpendiculaire audit pont ;
- au moins un capteur de vibrations monté sur ledit pont de sorte qu'une direction de détection de vibrations dudit au moins un capteur de vibrations soit également perpendiculaire audit pont ;
- un ou plusieurs contrôleurs relié(s) d'une part audit au moins un capteur de vibrations et d'autre part audit au moins un actionneur du dispositif d'amortissement de vibrations, le contrôleur étant configuré pour recevoir les données issues dudit au moins un capteur de vibrations, les traiter et envoyer des commandes audit au moins un actionneur du dispositif d'amortissement de vibrations sur la base des données traitées.

L'invention propose également un procédé pour amortir les vibrations générées par un propulseur d'étrave d'un navire, ledit procédé étant caractérisé en ce qu'il comprend les étapes suivantes :

- mesurer, sur un pont d'un navire et au moins selon une direction perpendiculaire audit pont, les vibrations subies par ce pont ;
- traiter les données issues de cette mesure ;
- commander au moins un actionneur d'au moins un dispositif d'amortissement des vibrations selon l'invention, dans lequel l'actionneur est agencé de sorte que sa direction d'actionnement soit perpendiculaire audit pont.

**Brève description des figures**

D'autres caractéristiques et avantages de l'invention apparaitront au cours de la lecture de la description détaillée qui va suivre pour la compréhension de laquelle on se reportera aux dessins annexés dans lesquels :

[Fig.1] la figure 1 est une vue en perspective éclatée d'un dispositif confirme à l'invention ;
[Fig.2] la figure 2 est une vue en perspective avant du dispositif de la figure 1 ;
[Fig.3] la figure 3 est une vue en perspective arrière du dispositif de la figure 1 ;
[Fig.4] la figure 4 est une vue en coupe de la figure 1;
[Fig.5] la figure 5 est une vue schématique, selon une vue en coupe partielle, d'un navire muni d'un propulseur d'étrave, ce navire étant muni d'un dispositif selon la figure 1 ;
[Fig.6] la figure 6 représente, de façon schématique les différentes étapes d'un procédé, conforme à l'invention, d'amortissement des vibrations générées par un propulseur d'étrave de navire.

**Description détaillée de l'invention**

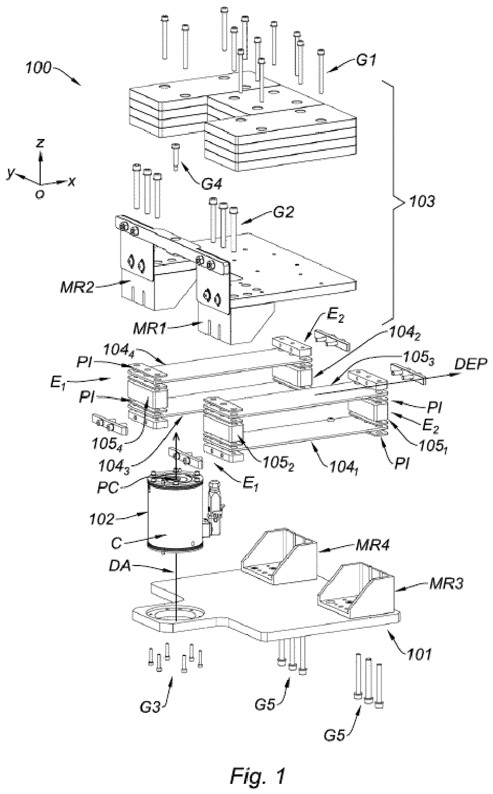

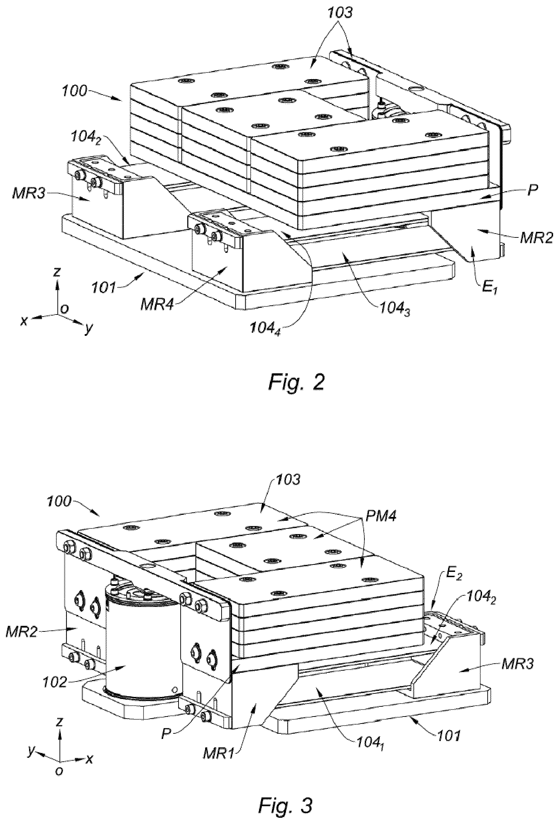

Sur l'ensemble des figures, on a représentés un repère orthogonal direct (X, Y, Z) d'origine O.
Nous allons tout d'abord décrire un dispositif 100 confirme à l'invention à l'appui des figures 1 à 4.
L'invention concerne un dispositif 100 d'amortissement de vibrations, en particulier destiné à amortir les vibrations générées par un propulseur d'étrave d'un navire, le dispositif comprenant :

- une embase 101 destinée à être fixée à une structure pour laquelle on cherche à amortir les vibrations ;
- au moins un actionneur 102;
- un ensemble masse-ressort comprenant une masse mobile 103 montée sur l'actionneur 102 de sorte que ladite masse mobile puisse être déplacée par l'actionneur selon une direction dite d'actionnement DA et une partie ressort $104_1$, $104_2$, $104_3$, $104_4$ dont une première extrémité $E_1$ est montée sur la masse mobile 103 et dont une deuxième extrémité $E_2$ est montée sur l'embase 101.

La partie ressort comprend au moins un premier jeu d'au moins deux ressorts à lame plate $104_1$, $104_2$, lesdits ressorts à lame plate étant d'une part agencés parallèlement selon une direction d'extension principale DEP sensiblement perpendiculaire à la direction d'actionnement et d'autre part situés entre l'embase 101 et la masse mobile 103 en référence à la direction d'actionnement DA et d'autre part.
Il convient de noter ce que l'on entend par ressort à lame plate.
Dans la famille des ressorts à lame, on peut trouver des ressorts à lame plate ou non. Nous nous plaçons ici dans le cas des ressorts à lame plate, ce qui exclut de fait des ressorts spirales ou assimilés, ou encore des ressorts à lame pliée.
Toutefois, un ressort à lame plate peut présenter différentes formes parmi lesquelles une forme rectangulaire, trapézoïdale ou encore triangulaire. Dans le cas de la forme rectangulaire, la largeur I est la même quelle que soit la cote (X) considérée selon sa longueur. Dans le cas de la forme trapézoïdale, cela signifie que la largeur I (Y) du ressort à lame plate évolue en fonction de la côte (X) considérée selon sa longueur. Le cas de la forme triangulaire peut être vu comme un cas particulier du cas de la forme trapézoïdale.
De plus, un ressort à lame plate peut présenter une épaisseur constante ou variable, quelle que soit la direction concernée. Toutes ces options sont couvertes par l'invention.
Bien entendu, pour des raisons industrielles, il est avantageux de mettre en œuvre un ressort à lame plate de forme rectangulaire et d'épaisseur constante, afin ainsi de former un parallélépipède.
Il convient de noter ce que l'on entend par masse mobile. Il s'agit de la masse amenée à se déplacer sous l'action de l'actionneur, à l'exception de celle des ressorts à lame plate. En effet, en pratique, la masse des ressorts à lame plate est négligeable par rapport au reste de la masse mobile.

Lorsque l'actionneur agit sur la masse mobile, cette dernière se voit imprimer un mouvement selon la direction d'actionnement DA (Z). Du fait de l'agencement des ressorts à lame plate, ceux-ci travaillent donc selon cette direction d'actionnement DA.

Cette direction d'actionnement DA étant perpendiculaire à la direction d'extension principale des ressorts à lame plate, on agit donc en flexion sur les ressorts à lame plate dans la direction de ces ressorts présentant la plus faible raideur (Z).

Dans les autres directions (X, Y), notamment dans la direction Y a priori libre de mouvement, les ressorts à lame plate sont bien plus rigides, contrairement par exemple à un ressort hélicoïdal.

La mise en œuvre d'un guidage n'est donc pas nécessaire.

Cette mise en œuvre est d'autant moins nécessaire que le fait de prévoir deux ressorts à lame plate agencés parallèlement permet de créer une forme de parallélogramme qui limite les risques d'une éventuelle rotation des ressorts, par exemple autour de la direction d'extension principale DEP (X).

L'effet procuré par cet agencement peut encore être augmenté en mettant en œuvre des blocs $105_1$, $105_2$; $105_3$, $105_4$ entre les extrémités respectives des ressorts à lame plate agencés parallèlement. Ces blocs, par exemple métalliques, sont en effet plus rigides que les ressorts à lame plate dans toutes les directions. Ces blocs $105_1$, $105_2$; $105_3$, $105_4$ assurent également un écartement constant entre les deux ressorts à lame plate $104_1$, $104_2$ ; $104_3$, $104_4$ respectivement.

De plus, les ressorts à lame plate $104_1$, $104_2$ , $104_3$, $104_4$ étant agencés entre l'embase 101 et la masse mobile 103 selon la direction d'actionnement, la masse mobile 103 se situe, notamment en utilisation, au-dessus des ressorts à lame plate. Cela permet de libérer l'accès à la masse et autorise de pouvoir régler aisément la masse en fonction de l'application envisagée, notamment en fonction du type de propulseur d'étrave considéré et/ou en fonction du lieu prévu d'installation du dispositif 100 d'amortissement des vibrations.

Avantageusement, la masse mobile 103 se présente, comme représenté sur les figures annexées, sous la forme d'un plateau P au-dessus duquel se trouve au moins une plaque PM1 de masse déterminée. La plaque PM1 est maintenue sur le plateau à l'aide de goujons G1. Ces goujons G1 sont aisément démontables, ce qui participe à l'adaptabilité du dispositif 100.

Le plateau P peut supporter au moins deux plaques $PM_1$, $PM_2$, $PM_3$, $PM_4$ présentant chacune une masse déterminée, lesdites plaques étant superposées selon la direction d'actionnement DA. Les plaques $PM_1$, $PM_2$, $PM_3$, $PM_4$ sont alors fixées au plateau P à l'aide des goujons G1.

Par ce biais, on peut adapter la masse mobile totale du dispositif 100 qui est amenée à intervenir dans l'ensemble masse-ressort. Cette adaptabilité du dispositif 100 peut aussi être effectuée au niveau des ressorts à lame plate.

En effet, le nombre de ressorts à lame plate mis en œuvre peut aussi être géré aisément.

Ainsi, la partie ressort peut comprendre au moins un deuxième jeu d'au moins deux ressorts à lame plate $104_3$, $104_4$.

Tout comme pour le premier jeu de ressorts à lame plate $104_1$, 1042, les ressorts à lame plate $104_3$, $104_4$ du deuxième jeu sont situés entre l'embase 101 et la masse mobile 103 en référence à la direction d'actionnement DA.

Les ressorts à lame plate $104_3$, $104_4$ du deuxième jeu sont par ailleurs agencés parallèlement selon une direction d'extension principale DEP identique à celles des ressorts à lame plate $104_1$, $104_2$ du premier jeu de ressorts à lame plate. La direction d'extension principale des différents ressorts à lame plate est donc commune.

Par ailleurs, le deuxième jeu de ressorts à lame plate $104_3$, $104_4$ est décalé par rapport au premier jeu de ressorts à lame plate $104_1$, $104_2$ selon une direction à la fois perpendiculaire à la direction d'actionnement DA et à la direction d'extension principale (DEP) commune. Cela est nécessaire pour une question d'encombrement. Surtout, cela permet de conserver une symétrie sur le dispositif. Dans ce cas, on prévoit alors avantageusement un actionneur 102 unique agencé entre le premier jeu de ressorts à lame plate $104_1$, $104_2$ et le deuxième jeu de ressorts à lame plate $104_3$, $104_4$, en référence à la direction (Y) à la fois perpendiculaire à la direction d'actionnement DA (Z) et à la direction d'extension principale DEP (X) commune. L'emploi de plusieurs jeux de ressorts à lame plate tel qu'expliqué précédemment permet d'augmenter la rigidité de la partie ressort, (notamment avec un ensemble de ressorts à lame plate identiques) et donc de s'adapter à l'application envisagée; tous les ressorts agissant, sur le plan fonctionnel, en parallèle.

Il convient de noter qu'une autre configuration pourrait être envisagée.

En effet, lorsque seulement un jeu de ressorts est prévu, on peut envisager d'implanter celui-ci à mi-distance dans la profondeur (Y) du dispositif et prévoir deux actionneurs disposés symétriquement, toujours selon cette profondeur (Y), de part et d'autre du jeu de ressorts.

Quelle que soit la conception envisagée, il est avantageux de positionner l'actionneur du côté de la première extrémité E1 de la partie ressort.

En effet, cette première extrémité E1 est celle où les ressorts à lame plate sont montés sur la masse mobile 103. Au niveau de cette première extrémité E1, les ressorts à lame plate $104_1$, $104_2$, $104_3$, $104_4$ sont en effet suspendus à la masse mobile 103, par l'intermédiaire de goujons G2 traversant la masse mobile 103 et les ressorts à lame plate. C'est donc au niveau de la première extrémité que le mouvement imprimé par l'actionneur 102 déplace la masse mobile 103 et les ressorts à lame plate $104_1$, $104_2$, $104_3$, $104_4$. En procédant ainsi, on améliore l'efficacité du dispositif 100.

L'actionneur 102 est avantageusement monté fixé sur l'embase 101, par exemple par l'intermédiaire de goujons G3 traversant l'embase 101 et le corps C de l'actionneur 102.

L'actionneur 102 est par ailleurs monté sur la masse mobile 103. Ceci peut s'effectuer par l'intermédiaire de goujons G4 traversant la masse mobile 103 et une partie centrale PC de l'actionneur 102. On comprend que cette partie centrale PC est mobile par rapport au corps C de l'actionneur, selon la direction d'actionnement DA.

L'actionneur 102 est par exemple un actionneur électromagnétique. Ce type d'actionneur est en effet aisé à mettre en œuvre, consomme une faible puissance et présente un comportement linéaire adéquat avec un pilotage simple.

Au niveau de la deuxième extrémité E2 de la partie ressort de l'ensemble masse-ressort, les ressorts à lame plate sont montés sur l'embase 101. Ceci peut s'effectuer par l'intermédiaire de goujons G5 qui traversent l'embase 101 et la deuxième extrémité E2 de la partie ressort.

Il convient de noter (cf. figure 1 par exemple), que le dispositif 100 peut prévoir des moyens de rigidification MR1, MR2, MR3, MR4 au niveau d'une part de l'interface entre la première extrémité E1 de la partie ressort et la masse mobile 103 et au niveau d'autre part de l'interface entre la deuxième extrémité E2 de la partie ressort et de l'embase 101. Ceci évite que les goujons travaillent en flexion. Ces moyens de rigidification MR1, MR2, MR3, MR4 assurent également un guidage lors de la mise en place de la partie ressort.

En outre, également au niveau des extrémités E1, E2 de la partie ressort de l'ensemble masse-ressort, il est avantageux de mettre en œuvre des pièces intermédiaires PI, entre la masse mobile 103 et un ressort plat $104_1$, $104_2$, $104_3$, $104_4$, entre un ressort plat $104_1$, $104_2$, $104_3$, $104_4$ et un bloc $105_1$, $105_2$, $105_3$, $105_4$ et entre un ressort plat $104_1$, $104_2$, $104_3$, $104_4$ et l'embase 101. La présence de ces pièces intermédiaires PI permet d'éviter d'abimer les ressorts à lame plate et ainsi d'éviter d'engendrer une rupture prématurée des ressorts à lame plate. De plus, ces pièces intermédiaires PI peuvent servir à régler l'écartement entre deux ressorts à lame plate d'un même jeu, ce qui est participe à l'adaptabilité du dispositif 100, en particulier si l'on souhaite changer l'épaisseur des ressorts à lame plate pour s'adapter à l'application envisagée.

Sur la figure 5, on a représenté, de façon schématique un navire 200 comportant un propulseur d'étrave.

Le navire 200 comprend au moins un dispositif 100 d'amortissement de vibrations tel que décrit précédemment. Le dispositif 100 est par ailleurs monté sur un pont 202 du navire de sorte que la direction d'actionnement DA de l'actionneur 101 soit perpendiculaire audit pont 202. Autrement dit, l'actionneur 102 agit selon la direction définie par l'épaisseur du pont.

Le navire 200 comprend également au moins un capteur de vibrations 300 monté sur ledit pont 202 de sorte qu'une direction de détection de vibrations dudit au moins un capteur de vibrations 300 soit également perpendiculaire audit pont 202. Le capteur de vibrations peut être un accéléromètre, unidirectionnel ou multidirectionnel.

Le navire 200 comprend aussi un ou plusieurs contrôleurs 400 relié(s) d'une part audit au moins un capteur de vibrations 300 et d'autre part audit au moins un actionneur 102 du dispositif 100 d'amortissement de vibrations. Le contrôleur 400 est configuré pour recevoir les données issues dudit au moins un capteur de vibrations 300, les traiter et envoyer des commandes audit au moins un actionneur 102 du dispositif 100 d'amortissement de vibrations sur la base des données traitées.

Dans ce contrôleur 400, le traitement des données s'effectue typiquement par un filtre passe-bande. Ce filtre passe-bande peut être de conception variée. Sa fonction est de ne conserver que les signaux issus du capteur de vibrations qui se situent dans une certaine gamme de fréquences, sur une bande étroite autour d'une fréquence principale qui est celle que l'on cherche à amortir. Dans le cas d'une application à un propulseur d'étrave, la fréquence principale est la fréquence de passage des pales du propulseur.

Ceci est classique pour l'homme du métier.

A titre d'exemple, on peut envisager la fonction de transfert H(s) suivante, Eq.1 :

$$[\text{math1}] \quad H(s) = \frac{g_2(1+g_1 s)}{s^2 + \omega_0^2}$$

Avec :

s = $\pm$ jω, où ω est la pulsation des signaux traités ; $\omega_0$ est la pulsation associée à la fréquence de passage des pales du propulseur d'étrave ; $g_1$, une constante de conception pour la stabilisation de la phase $g_2$, une constante de conception pour gérer la largeur de bande.

Pour plus d'informations, on pourra se référer à l'article « Comparison and Extensions of Control Methods for Narrow-Band Disturbance Rejection », Lisa A. Sievers et Andreas H. von Flotow, IEEE Transactions on signal processing, vol. 40, 10, October 1992, pp. 2377-2391.

Avec ces différents composants, on peut ainsi mesurer l'effet des vibrations générées par le propulseur d'étrave au niveau du pont d'un navire, à savoir à l'endroit même où des passagers ou membres d'équipage sont amenés à se déplacer, traiter ces données et agir en conséquence.

Le demandeur a en effet identifié qu'il était plus efficace de traiter la question de l'amortissement des vibrations non pas au niveau de la source de vibrations, comme dans le document D1, mais au niveau du lieu où ces vibrations s'avèrent gênantes. Le demandeur a par ailleurs identifié que la donnée pertinente sur un pont de navire était la composante verticale de vibration du pont, nullement traitée par le dispositif proposé dans le document D1. Au niveau d'un pont de navire cependant, la rigidité du pont peut évoluer en fonction du pont considéré et du lieu d'installation du dispositif 100 selon l'invention sur ce pont.

On voit l'intérêt ici d'une conception simple, donc robuste, et par ailleurs adaptable, tant pour la facilité de la gestion de masse mobile que de la rigidité totale liée à la partie ressort de l'ensemble masse-ressort.

Ceci est d'autant plus vrai que d'un point de vue pratique, le pont d'un navire se compose d'une structure rigide permettant d'assurer l'intégrité mécanique, laquelle est recouverte d'un plancher sur lesquelles les personnes à bord du navire sont amenées à marcher. Entre les deux, il existe un espace dans lequel le dispositif 100 selon l'invention peut être installé. Il est donc aisé d'accès par démontage du plancher.

On pourra désormais se référer à la figure 6.

Dans le cadre de l'invention, on propose également un procédé pour amortir les vibrations générées par un propulseur d'étrave d'un navire.

Le procédé comprend les étapes suivantes :

- mesurer ET1, sur un pont d'un navire et au moins selon une direction perpendiculaire audit pont, les vibrations subies par ce pont ;
- traiter ET2 les données issues de cette mesure ;
- commander ET3 au moins un actionneur d'au moins un dispositif 100 d'amortissement des vibrations tel que décrit précédemment, dans lequel l'actionneur est agencé de sorte que sa direction d'actionnement soit perpendiculaire audit pont.

Les contraintes liées au traitement des vibrations générées par un propulseur d"étrave d'un navire peuvent se rencontrer dans d'autres applications. Aussi, si le dispositif 100 d'amortissement des vibrations selon l'invention s'avère, du fait de sa conception, particulièrement bien adapté à cette application, il peut servir dans d'autres domaines d'applications dans lesquels des contraintes similaires, en particulier besoin d'une conception simple et adaptabilité, sont rencontrées.

Enfin et d'un point de vue pratique, il est intéressant de préciser le dimensionnement d'un dispositif 100 selon l'invention, en particulier de son ensemble masse-ressort.

Le cas industriellement pratique est celui d'une lame parallélépipédique, à savoir de forme rectangulaire (longueur L, largeur l) et d'épaisseur e constante. On se place donc dans ce cas par la suite.

En pratique, et compte tenu du lieu d'installation, on cherche à bénéficier d'une longueur (direction d'extension principale DEP selon l'axe X) la plus grande possible pour un ressort à lame plat. Ceci permet de minimiser les contraintes mécaniques que le ressort sera amené à subir et par suite de maximiser la durée de vie.

On dimensionne ensuite l'épaisseur e (axe Z) d'un ressort à lame plate.

Ce dimensionnement répond à deux exigences.

La première consiste à définir une contrainte maximale subie par le ressort plat en flexion qui reste inférieur à une limite de fatigue, nommée f. Ceci est effectuée également dans l'objectif de maximiser la durée de vie d'un ressort plat.

Dans le cas d'un ressort plat en acier, la limite de fatigue est typiquement comprise entre 100 MPa et 200 MPa.

Il existe une épaisseur maximale, $e_{MAX}$ à ne pas dépasser pour rester en dessous de la limite de fatigue f, définie par la relation Eq. 2 :

$$[\text{math } 2] \; e_{MAX} = \frac{2fL^2}{3Ed}$$

Avec :

f, la limite de fatigue (MPa)
L, la longueur du ressort à lame plate (m)
E, le module d'Young (MPa)
d, le déplacement dynamique maximal du ressort plat (selon axe Z qui correspond à la direction d'actionnement de l'actionneur 102 ici)

La seconde est que l'ensemble masse-ressort présente une pulsation propre $\omega_{EMR}$ qui correspond sensiblement à la pulsation $\omega_A$ de fonctionnement de l'actionneur 102, soit Eq. 3 :

$$[\text{math } 3] \; \omega_{EMR} \approx \omega_A$$

En supposant par ailleurs que les différents ressorts à lame plate sont identiques, la pulsation propre de l'ensemble masse-ressort s'écrit Eq. 4:

$$[\text{math } 4] \; \omega_{EMR}^2 = N_{RP} \frac{K_z}{m}$$

Avec :

$\omega_{EMR}$, la pulsation propre de l'ensemble masse-ressort ;
$N_{RP}$, le nombre de ressorts à lame plate (lesquels sont en parallèle) ;

Kz, la rigidité d'un ressort plat selon la direction Z (direction d'actionnement) ; et

m, la masse mobile (inclus le cas échéant le plateau P, les masses MP1 à MP4, mais aussi toutes les autres pièces amenées à se déplacer, par exemple les goujons G1, G2, G4 e les moyens MR1, MR2 lorsque ceux-ci sont avantageusement prévus).

Par ailleurs, la rigidité Kz peut s'exprimer sous la forme suivante pour ce ressort à lame plate Eq. 5 :

$$[\text{math 5}] \; K_Z = \frac{Eel}{4L^3}$$

Avec :

E, le module d'Young du matériau formant un ressort à lame plate (MPa)

e, l'épaisseur d'un ressort à lame plate (m) - axe Z

l, la largeur d'un ressort à lame plate (m) - axe Y

L, la longueur d'un ressort à lame plate (m) - axe X

La combinaison des équations Eq. 3, Eq. 4 et Eq. 5 aboutit à Eq. 6 :

$$[\text{math 6}] \; \omega_A^2 \approx N_{RP} \frac{Eel}{4mL^3}$$

Enfin, on peut se donner en plus comme critère le fait que Eq. 7 :

$$[\text{math 7}] \; \frac{l}{e} \geq 10$$

On peut montrer en effet que ceci permet d'avoir un rapport Eq. 8 :

$$[\text{math 8}] \; \frac{K_Z}{K_Y} \geq 100$$

qui permet d'éviter tout mouvement parasite dans la direction Y (fonction de guidage).

On peut évidemment être moins exigent et prévoir un rapport l/e plus faible tout en maintenant un guidage bien meilleur qu'avec un ressort hélicoïdal.

Ainsi, avec les équations Eq. 2, Eq. 6 et Eq.7, nous avons les règles de dimensionnement générales d'un ensemble masse-ressort mis en œuvre dans le dispositif 100 selon l'invention. Comme on peut le constater avec ces équations, on peut jouer sur divers paramètres.

On peut jouer sur les dimensions d'un ressort plat. Une fois la longueur maximale définie compte tenu de contraintes d'installation selon l'application considérée, on dimensionne l'épaisseur e en respectant Eq. 2 et on en déduit la largeur l avec Eq. 7.

On peut également jouer sur le nombre de ressorts à lame plate mis en parallèle, notamment pour s'assurer de respecter Eq .6. on voit donc ici un intérêt à prévoir plus de deux ressorts à lame plate $104_1$, $104_2$.

On peut aussi jouer sur la masse mobile m, notamment pour s'assurer de respecter l'équation Eq. 6.

Ces choix dépendent évidemment de l'application considérée, laquelle va définir la pulsation $\omega_A$ de l'ac-tionneur 102, pulsation qui dépend directement des mesures faites par le capteur de vibrations, dont la mesure dépend elle-même des effets de la source de vibrations au niveau du lieu de prise de la mesure. Ainsi, outre la simplicité de la conception proposée, permettant d'assurer un guidage et donc une efficacité optimale de manière simple, on voit bien ici toute l'adaptabilité du dispositif 100 selon l'invention.

Le fait de pouvoir adapter la valeur de la masse mobile m aisément est particulièrement intéressant. Ceci est d'abord lié au fait que la masse mobile est aisément accessible du fait qu'elle est située au-dessus des ressorts à lame plate et avantageusement aisément réglable. De manière similaire, si les ressorts à lame plate doivent être adaptés, par exemple pour augmenter la rigidité globale selon l'axe Z, le dispositif 100 permet aussi de mettre en œuvre des ressorts à lame plate en nombre plus élevé, voire de plus grande épaisseur.

De manière plus générale, on peut aussi envisager un procédé d'amortissement de vibrations générées par un propulseur d'étrave d'un navire, le procédé comprenant les étapes suivantes :

- mesurer ET'1 sur un pont du navire et au moins selon une direction perpendiculaire audit pont, les vibrations subies par ce pont ;
- traiter ET'2 les données issues de cette mesure ;
- commander ET'3 au moins un actionneur d'au moins un dispositif d'amortissement des vibrations, dans lequel l'actionneur est agencé de sorte que sa direction d'actionnement soit perpendiculaire audit pont, le dispositif comprenant ;
- une embase fixée au pont du navire;
- au moins un actionneur;
- un ensemble masse-ressort comprenant une masse mobile montée sur l'actionneur de sorte que ladite masse mobile puisse être déplacée par l'actionneur selon une direction dite d'actionnement et une partie ressort dont une première extrémité est montée sur la masse mobile et dont une deuxième extrémité est montée sur l'embase.

## Revendications

1. Dispositif (100) d'amortissement de vibrations, en particulier destiné à amortir les vibrations générées par un propulseur d'étrave d'un navire, le dispositif comprenant :

- une embase (101) destinée à être fixée à une structure pour laquelle on cherche à amortir les vibrations ;
- au moins un actionneur (102);
- un ensemble masse-ressort comprenant une masse mobile (103) montée sur l'actionneur (102) de sorte que ladite masse mobile puisse être déplacée par l'actionneur selon une direction dite d'actionnement (DA) et une partie ressort ($104_1$, $104_2$, $104_3$, $104_4$) dont une première extrémité ($E_1$) est montée sur la masse mobile et dont une deuxième extrémité ($E_2$) est montée sur l'embase (101),

**caractérisé en ce que** la partie ressort comprend au moins un premier jeu d'au moins deux ressorts à lame plate ($104_1$, $104_2$), lesdits ressorts à lame plate étant d'une part agencés parallèlement selon une direction d'extension principale (DEP) sensiblement perpendiculaire à la direction d'actionnement et étant d'autre part situés entre l'embase (101) et la masse mobile (103) en référence à la direction d'actionnement (DA).

2. Dispositif (100) selon la revendication 1, dans lequel ledit au moins un actionneur (102) est agencé du côté de la première extrémité ($E_1$), laquelle est montée sur la masse mobile (103), de la partie ressort.

3. Dispositif selon l'une des revendications précédentes, dans lequel la masse mobile (103) comporte un plateau (P) supportant au moins une plaque ($PM_1$) de masse déterminée.

4. Dispositif selon la revendication précédente, dans lequel le plateau (P) supporte au moins deux plaques ($PM_1$, $PM_2$) présentant chacune une masse déterminée, lesdites plaques étant superposées selon la direction d'actionnement (DA).

5. Dispositif (100) selon l'une des revendications précédentes, dans lequel la partie ressort comprend au moins un deuxième jeu d'au moins deux ressorts à lame plate ($104_3$, $104_4$) qui sont d'une part situés entre l'embase (101) et la masse mobile (103) en référence à la direction d'actionnement (DA) et d'autre part agencés parallèlement selon une direction d'extension principale (DEP) identique à celles des ressorts à lame plate ($104_1$, $104_2$) du premier jeu de ressorts à lame plate, définissant ainsi une direction d'extension principale commune, le deuxième jeu de ressorts à lame plate ($104_3$, $104_4$) étant par ailleurs décalé par rapport au premier jeu de ressorts à lame plate ($104_1$, $104_2$) selon une direction à la fois perpendiculaire à la direction d'actionnement (DA) et à la direction d'extension principale (DEP) commune.

6. Dispositif (100) selon la revendication précédente, dans lequel il est prévu un actionneur (102) unique agencé entre le premier jeu de ressorts à lame plate ($104_1$, $104_2$) et le deuxième jeu de ressorts à lame plate ($104_3$, $104_4$), en référence à la direction à la fois perpendiculaire à la direction d'actionnement (DA) et à la direction d'extension principale (DEP) commune.

7. Dispositif (100) selon l'une des revendications précédentes, dans lequel deux ressorts à lame plate ($104_1$, $104_2$ ; $104_3$, $104_4$) d'un même jeu de ressorts à lame plate sont maintenus parallèlement par l'intermédiaire de deux blocs ($105_1$, $105_2$ ; $105_3$, $105_4$) situés entre les extrémités ($E_1$, $E_2$) respectives des ressorts à lame plate, lesdits blocs ($105_1$, $105_2$; $105_3$, $105_4$) étant plus rigides que lesdits ressorts ($104_1$, $104_2$ ; $104_3$, $104_4$).

8. Dispositif selon l'une des revendications précédentes, dans lequel la masse mobile (103) comprend, au niveau d'une première extrémité (E1) d'un ressort plat, un premier moyen de rigidification (MR1, MR2) et dans lequel l'embase (101) comprend, au niveau d'une deuxième extrémité (E2) d'un ressort plat, un deuxième moyen de rigidification (MR3, MR4).

9. Navire (200) munie d'au moins un propulseur d'étrave (201), **caractérisé en ce qu'**il comprend :

- au moins un dispositif (100) d'amortissement de vibrations selon l'une des revendications 1 à 8, ledit dispositif (100) étant monté sur un pont (202) du navire de sorte que la direction d'actionnement (DA) de l'actionneur (101) soit perpendiculaire audit pont (202);
- au moins un capteur de vibrations (300) monté sur ledit pont (202) de sorte qu'une direction de détection de vibrations dudit au moins un capteur de vibrations (300) soit également perpendiculaire audit pont (202) ;
- un ou plusieurs contrôleurs relié(s) (400) d'une part audit au moins un capteur de vibrations (300) et d'autre part audit au moins un actionneur (102) du dispositif (100) d'amortissement de vibrations, le contrôleur (400) étant configuré pour recevoir les données issues dudit au moins un capteur de vibrations (300), les traiter et envoyer des commandes audit au moins un actionneur (102) du dispositif (100) d'amortissement de vibrations sur la base des données traitées.

10. Procédé pour amortir les vibrations générées par un propulseur d'étrave d'un navire, ledit procédé étant **caractérisé en ce qu'**il comprend les étapes suivantes :

- mesurer (ET1), sur un pont d'un navire et au moins selon une direction perpendiculaire audit pont, les vibrations subies par ce pont ;
- traiter (ET2) les données issues de cette mesure ;
- commander (ET3) au moins un actionneur d'au moins un dispositif d'amortissement des vibrations selon l'une des revendications 1 à 8, dans lequel l'actionneur est agencé de sorte que sa direction d'actionnement soit perpendiculaire audit pont.

Fig. 1

Fig. 2

Fig. 3

Fig. 4

*Fig. 5*

*Fig. 6*

Europäisches
Patentamt

European
Patent Office

Office européen
des brevets

## RAPPORT DE RECHERCHE EUROPEENNE

Numéro de la demande

EP 20 15 5886

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2010/053933 A1 (LORD CORP [US]; BADRE-ALAM ASKARI [US]; JANOWSKI MICHAEL D [US]) 14 mai 2010 (2010-05-14) | 1-8 | INV.<br>F16F7/10<br>F16F7/116<br>B63H21/30 |
| Y | * figures C3A, 3B, 7A, 7B, * | 9,10 | |
| Y | JP H10 138988 A (MITSUI SHIPBUILDING ENG) 26 mai 1998 (1998-05-26) | 9,10 | |
| A | * figure 2 * | 1 | |

DOMAINES TECHNIQUES
RECHERCHES (IPC)

F16F
B63J
B63H

Le présent rapport a été établi pour toutes les revendications

| Lieu de la recherche | Date d'achèvement de la recherche | Examinateur |
|---|---|---|
| La Haye | 19 février 2020 | de Miscault, Xavier |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 15 5886

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-02-2020

| Document brevet cité au rapport de recherche | Date de publication | Membre(s) de la famille de brevet(s) | Date de publication |
|---|---|---|---|
| WO 2010053933 A1 | 14-05-2010 | CA 2742798 A1<br>EP 2350491 A1<br>JP 2012508356 A<br>KR 20110081344 A<br>US 2011033310 A1<br>US 2011209958 A1<br>WO 2010053933 A1 | 14-05-2010<br>03-08-2011<br>05-04-2012<br>13-07-2011<br>10-02-2011<br>01-09-2011<br>14-05-2010 |
| JP H10138988 A | 26-05-1998 | AUCUN | |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• JP H10138988 B

**Littérature non-brevet citée dans la description**

• **LISA A. SIEVERS ; ANDREAS H. VON FLOTOW.** Comparison and Extensions of Control Methods for Narrow-Band Disturbance Rejection. *IEEE Transactions on signal processing,* 10 Octobre 1992, vol. 40, 2377-2391